# EUROPÄISCHE PATENTSCHRIFT

(11) **EP 0 727 077 B1**
(45) Veröffentlichungstag und Bekanntmachung des Hinweises auf die Patenterteilung: **21.04.1999**
(21) Anmeldenummer: 94931499.1
(22) Anmeldetag: 28.10.1994
(51) Int. Cl.: G07C 3/00, G01D 21/02

(54) **MULTIFUNKTIONSSENSOREN IN ELEKTRONISCHEN PRODUKTEN**
MULTIFUNCTIONAL SENSORS USED IN ELECTRONICS PRODUCTS
DETECTEURS MULTIFONCTIONS UTILISES DANS DES PRODUITS ELECTRONIQUES

(30) Priorität: 03.11.1993 DE 4337515
(43) Veröffentlichungstag der Anmeldung: 21.08.1996
(73) Patentinhaber: FRAUNHOFER-GESELLSCHAFT ZUR FÖRDERUNG DER ANGEWANDTEN FORSCHUNG E.V., 80636 München (DE)
(72) Erfinder: STEINER, Klaus, D-79194 Gundelfingen (DE); KIST, Rainer, D-79199 Kirchzarten (DE)
(74) Vertreter: Pfenning, Meinig & Partner
(86) Internationale Anmeldenummer: DE9401278
(87) Internationale Veröffentlichungsnummer: WO9512868

(56) Entgegenhaltungen:
- EP-A- 0 051 026
- EP-A- 0 623 900
- GB-A- 2 176 637
- GB-A- 2 181 250
- US-A- 4 972 099

## Beschreibung

Die Erfindung betrifft "Consumer"-Elektronikprodukte, wie Fernseher, Audio- und Videogeräte, Kopierer, Faxgeräte, Computer oder dgl. mit integrierten Multifunktionssensoren zur Erfassung von statischen und dynamischen Zustandsdaten wie Funktionstüchtigkeit, Lebensgeschichte, Alterung und Materialeigenschaften und entsprechende Vorrichtungen zur Speicherung, Auswertung und Darstellung der Daten.

Verbesserte Einsichten in die Ökologie unserer Lebenssphäre führen zu der Überzeugung, Produkte teilweise oder ganz wiederverwertbar zu gestalten. Heutzutage berücksichtigt der Endverbraucher beim Kauf zunehmend umweltspezifische Aspekte. Bei Produkten des täglichen Gebrauchs spielen außerdem Gesichtspunkte wie die Gesundheitsbeeinträchtigung durch die verwendeten Materialien, Entstehung von gefährlichen Gasen, Stäuben und Strahlen, Wiederverwertbarkeit, ungefährliche Entsorgung evtl. auch durch Deponierung oder Verbrennung, Sicherheit im Betrieb, hohe Lebensdauer etc. eine kaufentscheidene Rolle. Produkte, bei denen obengenannte Problembereiche vermindert auftreten oder gesichert ausgeschlossen werden können, erfahren zunehmende Nachfrage am Markt.

EP-A-0 051 026 beschreibt ein Consumer-Elektronikprodukt (Taschenrechner; Uhr) mit einem Strahlungssensor, der mit einem Datensammler zur Abspeicherung der Sensordaten verbunden ist.

GB-A-2 176 637 betrifft ein Elektronikprodukt (Fernsehgerät) mit Speicher zur Einspeicherung gerätespezifischer Herstellungs-, Vertriebs- und Reparaturdaten, die jedoch nicht über Sensoren gewonnen werden.

Die Patentanmeldung EP-A-0 623 900, die nach Artikel 54 (3) (4) EPÜ zum Stand der Technik zählt, bezweckt ein optimiertes Recycling von Elektronikkomponenten und offenbart ein Elektronikprodukt mit Sensoren für Temperatur, Beschleunigung, elektrische Spannung, Feuchtigkeit, Betriebsstunden, Ausgasung und elektromagnetische Abstrahlung, jedoch nicht für Rauch- oder Brandgase.

Consumer-Elektronikprodukte stellen ein besonderes Problemfeld bezüglich Recycling/Wiederverwertung dar. Unter Consumer-Elektronikprodukten werden dabei alle elektronischen Geräte verstanden, die für den Endverbraucher zugänglich sind. Hierzu zählen insbesondere Fernseher, Audio- und Videogeräte, Kopierer, Faxgeräte, Computer oder dergleichen. Problematisch ist hier insbesondere, daß bei den langen Lebensdauern dieser Produkte keine gesicherten Daten über Materialeinsatz/-alterung, Funktionstüchtigkeit, synergistische Wirkungen unterschiedlicher Einflüsse und Lebensgeschichte vorhanden sind. Recycling von Baugruppen oder Wiederverwertung von Material und Teilen ohne diese Daten ist nur eingeschränkt möglich. Es existieren Wiederverwertungsgesellschaften, die z.B. integrierte Schaltkreise aus Computern ausbauen, testen und als Second-Hand-Produkte verkaufen. Allein die Kosten für Funktionstest und Qualitätssicherung begrenzen allerdings die weite Verbreitung solcher Wiederverwertung. Gemessen an dem Volumen der jährlich ausgesonderten elektronischen Produkte ist die Wiederverwertung des Elektronikschrotts derzeit gering.

Ausgehend hiervon ist es die Aufgabe der vorliegenden Erfindung, Consumer-Elektronikprodukte so zu verbessern, daß das Recycling von Baugruppen wesentlich erleichert wird.

Die Aufgabe wird durch die Merkmale des Anspruchs 1 gelöst. Bevorzugte Weiterbildungen sind in den Unteransprüchen angegeben.

Erfindungsgemäß wird demnach so vorgegangen, daß die entsprechenden Consumer-Elektronikprodukte, wie z.B. Fernseher oder Geräte zur Büroorganisation, mit sogenannten Multifunktions-/Alterungssensoren ausgerüstet wird. Multifunktions-/Alterungssensoren sind dabei Sensoren für physikalische und chemische Parameter. Mit diesen Multifunktionssensoren können neben der Alterung auch die verschiedensten Größen, wie z.B. Feuchte, Überhitzung, Schwelbrandgeruch, Ausgasung von Materialien, an Bildschirmen oder anderen elektronischen Baugruppen entstehende Gase, elektromagnetische Felder (Elektrosmog) usw., bestimmt werden. Zusätzlich können über elektronische Mittel Größen wie z.B. Einschaltfrequenz, Betriebsstunden, Überspannung, Kurzschluß oder die Temperatur erfaßt werden.

Diese erhobenen Daten werden dann in einem Datensammler zur späteren Auswertung abgelegt. Diese Daten bilden dann die Grundlage für eine qualifizierte Beurteilung des Zustandes des betreffenden Produktes. Insbesondere werden die Daten dann wichtig, wenn wiederverwertet werden soll. Die Daten können dazu entweder über ein bereits im elektronischen Produkt vorhandenes Anzeigemittel, wie z.B. dem Bildschirm im Fernseher, angezeigt werden. Eine andere Möglichkeit besteht noch darin, daß die gesammelten Daten über eine separate Anzeigevorrichtung abgerufen werden.

Nach einer vorteilhaften Ausgestaltung der Erfindung wird weiter vorgeschlagen, daß die Sensoren und/oder der Datensammler mit einer Auswerteelektronik verbunden sind. Dadurch besteht die Möglichkeit, daß die gesammelten Daten nach einem bestimmten Programm ausgewertet werden und so bereits die ausgewerteten Daten am Anzeigemittel sichtbar gemacht werden.

Erfindungsgemäß kann dabei entweder das Elektronikprodukt, wie z.B. der Fernseher, mit der Auswerteelektronik und der Abfrageeinrichtung versehen sein oder die entsprechenden Sensoren bzw. der Datensammler werden mit externen Abfrageeinrichtungen und einer Auswerteelektronik verbunden. Entsprechendes gilt auch für das Anzeigemittel, das entweder extern zur Verfügung gestellt wird oder im Gerät selbst (z.B. der Bildschirm) vorhanden ist.

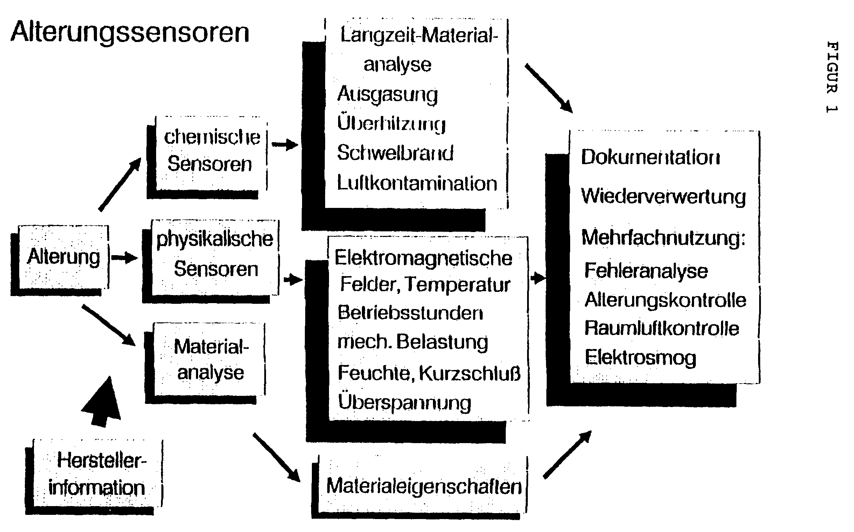

Besonders vorteilhaft ist es, daß während des Betriebes des Produktes neben der Alterung die gemessenen Informationen auch für weitere Funktionen genutzt werden können. Hierunter fallen Anwendungen wie Fehleranalyse, Raumluftüberwachung, Elektrosmog, Brandmelder usw. (siehe Zusammenstellung in Figur 1). Der besondere Vorteil der erfindungsgemäßen Lösung ist demnach in der kombinierten Funktion (sicherheits-, gesundheits- und umweltrelevante Funktionen kombiniert mit Alterungsanalyse) zu sehen.

Nachfolgend werden anhand ausgewählter Beispiele für die Bestimmung von verschiedenen Funktionen die dazu geeigneten Sensoren näher beschrieben.

1. Schwelbrand, Brandmelder, Überhitzung (sicherheitsrelevante Parameter kombiniert mit Alterungsüberwachung und Gesundheitsaspekten):

Eine quantitative Gasanalyse erfolgt mit unterschiedlich spezifischen Gassensoren (Gassensorensemble) und einer einfachen Mustererkennung. Die geeigneten Gassensoren sind dazu Halbleiter-Gassensoren, die mit gängigen Verfahren der Dünnschicht-Technologie hergestellt werden können. Die Mustererkennung erlaubt mittels eines einfachen Prozessors, wie ihn viele elektronische Produkte schon beinhalten, die simultane Bestimmung mehrerer Größen (hier insbesondere Gaskonzentrationen). Bei Überhitzung - wohl wichtige Ursache für Lebenszeitverkürzung - treten Gase aus den heißen Materialien aus. Halbleiter-Gassensoren - andere Gassensoren wie z.B. solche mit integriert-optischen Wandlern oder spektroskopischen Modulen sind grundsätzlich auch einsetzbar - erlauben die Detektion austretender Gase wie H₂, COₓ, H₂O, NOₓ und CₓH_{y} usw. Dadurch ist die Detektion von Überhitzungen und eine Langzeit-Materialanalyse möglich. Da Halbleiter-Gassensoren die Gaskonzentration als elektrisches Signal darstellen, sind die Daten einfach zu speichern. Darüber hinaus lassen sich die Sensoren mit lokalen Temperaturfühlern kombinieren. Somit wird eine lokale Überwachung inklusive Materialanalyse (= Alterungsanalyse) möglich. Eine solche Sensoranordnung läßt sich auch so modifizieren, daß die Gassensoren gleichzeitig als Brandmelder fungieren. Des weiteren sind reaktive und gefährliche Gase detektierbar, die z.B. an Bildschirmen oder Hochspannungsteilen (z.B. PCB aus Netzteilen) entstehen bzw. austreten.

2. Elektrosmog (gesundheitsrelevante Parameter kombiniert mit Alterungsanalyse). Hierzu sind Hall-Sensoren geeignet.

Hall-Sensoren liefern Daten über statische und zeitlich veränderliche Magnetfelder und erlauben so die Detektion von Elektrosmog. Gleichzeitig werden auch Stromspitzen, die ihrerseits erheblich zur Alterung beitragen können, nachgewiesen.

3. Ausgasung (gesundheits-/umweltrelevante Parameter kombiniert mit Alterungsanalyse, Olfaktometrie (z.B. Detektion von Plastikgeruch).

Insbesondere Plastikmaterialien gasen im Verlauf des Alterungsprozesses aus. Das Material verändert sich unter Umständen erheblich und altert. Die Wiederverwertung bzw. der Restwert von Baugruppen hängt erheblich von dem Alterungsgrad der Materialien ab. Die Materialalterung wiederum ist von Feuchte, Temperatur, Temperaturschwankungen, Strahlung (z.B. aus TV-Bildschirm), von mechanischem und elektrischem Streß usw. abhängig. Sensoren können diese Größen detektieren und einer Aufzeichnung zugänglich machen, so daß eine qualifizierte Alterungsanalyse möglich wird. Ausgasungen können auch eine Geruchsbelästigung verursachen. Mischgassensoren sind dazu hervorragend geeignet, spezifische Gerüche/Aroma zu detektieren (Olfaktometrie).

4. Fehlbedienung (Alterungsanalyse kombiniert mit sicherheitsrelevanten Aspekten)

Ein Deckchen auf dem Fernseher verhindert einerseits das Verkratzen des Gehäuses, andererseits kann dadurch aber auch die Luftzirkulation im Gehäuse und der Austausch mit der Raumluft gestört werden. Überhitzungen können die Folge sein. Gassensoren reagieren bereits auf kleinste Veränderungen der Luftzusammensetzung (Mischgassensor) und können so durch Überhitzung bedingte Alterungen detektieren bzw. aufzeichnen. Darüber hinaus kann ein Alterungssensor vor unsachgemäßem Gebrauch warnen.

Erfindungswesentlich ist demnach, daß je nach Anwendungsfall, der durch ein Produkt und seine Betriebsbedingungen gegeben ist, spezifische selektive Sensoren für chemische und physikalische Größen kombiniert werden können. Dadurch steht in elektronischen Produkten ein umfassendes System zur Erfassung und Auswertung der verschiedensten relevanten Größen und Daten zur Verfügung.

## Patentansprüche

1. Consumer-Elektronikprodukt, wie z.B. Fernseher, Video- und HiFi-Anlage, Radio, Receiver, Tuner, Verstärker, LP- und CD-Plattenspieler, Tonbandgerät, Camcorder, Monitor und PC, Gerät der Büroautomatisation wie z.B. Telefon, Faxgerät, Workstation, Kopierer, Printer/Drucker, Plotter, Massenspeicher, Registrierkasse, Schreibautomat und Computer, bestehend aus
einem Gehäuse, Kunststoffbauteilen, Anzeigemitteln wie Bildschirm oder Display, Bedienungsteil, elektronischen Baugruppen und Stromversorgung, dadurch **gekennzeichnet**,
daß innerhalb und/oder am Gehäuse Rauch- und/ oder Brandmeldesensoren und mindestens ein weiterer Sensor, ausgewählt aus chemischen Gassensensoren und/oder Mischgassensoren und/oder Temperaturfühlern und/oder Strahlungssensoren und/ oder Feuchtefühlern und/oder Strömungsmessern und/oder Hall-Sensoren und/oder Sensoren für elektrische und magnetische Felder oder Flüsse und/oder Ladungssensoren und/oder Belastungssensoren, z.B. für Zug, Druck, Dehnung oder Schwingung, und/oder Sensoren für elektromagnetische Verträglichkeit, zur Erfassung von Lebenszeitdaten wie Funktionstüchtigkeit, Lebensgeschichte, Alterung und Materialeigenschaften von Teilen, Baugruppen, Einzelelementen oder Gehäusen des Elektronikproduktes angeordnet sind, wobei 2 bis 100 Sensoren ein Sensor-Ensemble bilden, und
daß die Sensoren mit einem Datensammler zur Abspeicherung der Daten verbunden sind.

2. Consumer-Elektronikprodukt nach Anspruch 1, dadurch gekennzeichnet, daß die Sensoren und/oder der Datensammler mit einem Aufzeichnungsgerät und/oder einer Auswertelektronik und/oder einer Abfrageeinrichtung und/oder Anzeigemitteln verbunden sind.

3. Consumer-Elektronikprodukt nach mindestens einem der Ansprüche 1 bis 2,
dadurch gekennzeichnet, daß die chemischen Gassensoren Sensoren für Gase und Substanzen wie H₂, COₓ, H₂O, NOₓ, CₓH_{y}-CHO, PCB und/oder Weichmacher sind.

4. Consumer-Elektronikprodukt nach mindestens einem der Ansprüche 1 bis 3,
dadurch gekennzeichnet, daß mehrere gleiche oder unterschiedliche Sensor-Ensembles zu einem Multifunktionsmodul zusammengefaßt sind.

5. Consumer-Elektronikprodukt nach Anspruch 1 bis 4,
dadurch gekennzeichnet, daß die Sensoren, die Ensembles und/oder Module mit Einrichtungen zur Meßwertaufbereitung, wie z.B. Abfrageeinrichtungen oder Anzeigemitteln, Gesamteinheiten bilden.

## Claims

1. Consumer electronics product such as e. g. TV, video and Hi-Fi system, radio, receiver, tuner, amplifier, LP and CD phonograph, tape recorder, camcorder, monitor and PC, office automation equipment such as e. g. telephone, fax terminal, work station, copier, printer, plotter, mass storage, cash register, automatic typewriter and computer, comprising a housing, plastic component parts, display means such as picture screen or display, control element, electronic componentries, and current supply, **characterised** in that, within and/or on the housing, smoke alarm and/or fire alarm sensors and at least one further sensor selected from chemical gas sensors and/or mixed gas sensors and/or temperature detecting elements and/or radiation sensors and/or moisture detecting elements and/or flow meters and/or Hall sensors and/or sensors for electric and magnetic fields or fluxes and/or charge sensors and/or load sensors, e. g. for tension, pressure, expansion or vibration, and/or sensors for electromagnetic compatibility are arranged for acquiring lifetime data like operability, life story, ageing, and material properties of parts, componentries, individual elements or housings of said electronics product, 2 to 100 sensors constituting a sensor ensemble, and that the sensors are connected with a data collector for storing the data.

2. Consumer electronics product according to Claim 1, characterised in that the sensors and/or the data collector are connected with a recorder and/or an evaluating electronic and/or an interrogator and/or display means.

3. Consumer electronics product according to at least one of Claims 1 to 2, characterised in that the chemical gas sensors are sensors for gases and substances like H₂, COₓ, H₂O, NOₓ, CₓH_{y}-CHO, PCB and/or softeners.

4. Consumer electronics product according to at least one of Claims 1 to 3, characterised in that several identical or different sensor ensembles are combined to form a multifunctional module.

5. Consumer electronics product according to Claims 1 to 4, characterised in that the sensors, the ensembles, and/or modules, together with facilities for signal conditioning such as e. g. interrogators or display means, constitute overall units.

## Revendications

1. Produit électronique pour consommateur, comme par exemple téléviseur, installation vidéo et installation HiFi, radio, récepteur, tuner, amplificateur, lecteur de disques LP et CD, magnétophone, camescope, moniteur et ordinateur PC, appareil de l'automatisation de bureau, comme par exemple téléphone, télécopieur, station de travail, copieur, imprimante/dispositif d'impression, traceur de courbes, mémoire de masse, caisse enregistreuse, automate d'écriture, ordinateur, constitué par
un boîtier, des composants en matière plastique, des moyens d'affichage tels qu'un écran ou un dispositif d'affichage, une partie de commande, des modules électroniques et une alimentation en courant,
caractérisé en ce qu'à l'intérieur du boîtier/ou sur le boîtier sont disposés des détecteurs de fumée et/ou d'incendie et au moins un autre capteur, choisi parmi des capteurs chimiques de gaz et/ou des capteurs de gaz mixte et/ou des capteurs de température et/ou des capteurs de rayonnement et/ou des capteurs d'humidité et/ou des capteurs d'écoulement et/ou des capteurs à effet Hall et/ou des capteurs pour détecter des champs électriques et magnétiques ou des capteurs de flux et/ou de charges et/ou des capteurs de contrainte, par exemple pour une traction, une compression, une dilatation ou une oscillation et/ou des capteurs de compatibilité électromagnétique, pour détecter des données de durée de vie telles que l'aptitude au fonctionnement, l'historique, le vieillissement et les caractéristiques des matériaux de pièces, de modules, d'éléments individuels ou de boîtiers du produit électronique, 2 à 100 capteurs formant un ensemble de capteurs, et
que les capteurs sont reliés à une unité de collecte des données servant à mémoriser les données.

2. Produit électronique pour consommateur selon la revendication 1, caractérisé en ce que les capteurs et/ou l'unité de collecte des données sont reliés à un appareil d'enregistrement et/ou une unité électronique d'exploitation et/ou un dispositif d'interrogation et/ou des moyens d'affichage.

3. Produit électronique pour consommateur selon au moins l'une des revendications 1 et 2,
caractérisé en ce que les capteurs chimiques de gaz sont des capteurs servant à détecter des gaz et des substances tels que H₂, COₓ, H₂O, NOₓ, CₓH_{y}-CHO, du PCB et/ou un plastifiant.

4. Produit électronique pour consommateur selon au moins l'une des revendications 1 à 3,
caractérisé en ce que plusieurs ensembles identiques ou différents de capteurs sont rassemblés pour former un module multifonctionnel.

5. Produit électronique pour consommateur selon les revendications 1 à 4,
caractérisé en ce que les capteurs, les ensembles et/ou les modules forment des unités complètes avec des dispositifs de délivrance de valeurs de mesure, comme par exemple des dispositifs d'interrogation ou des moyens d'affichage.
